# FASCICULE DE BREVET EUROPEEN

(11) **EP 2 082 960 B1**
(45) Date de publication et mention de la délivrance du brevet: **09.02.2011**
(21) Numéro de dépôt: 08172607.7
(22) Date de dépôt: 22.12.2008
(51) Int. Cl.: B64D 27/18, B64D 27/12, B64D 27/26

(54) **Accrochage d'un système propulsif à un élément de structure d'un aéronef**
Aufhängung eines Antriebssystems an einem Strukturelement eines Luftfahrzeugs
Attachment of a propulsion system to an aircraft structural element

(30) Priorité: 23.01.2008 FR 0800336
(43) Date de publication de la demande: 29.07.2009
(73) Titulaire: Snecma, 75015 Paris (FR)
(72) Inventeur: Balk, Wouter, 77000 Melun (FR)
(74) Mandataire: Ramey, Daniel

(56) Documents cités:
- EP-A- 1 627 812
- WO-A-92/08642
- GB-A- 1 599 730
- GB-A- 2 010 969
- GB-A- 2 064 005
- GB-A- 2 200 878
- GB-A- 2 203 105

## Description

La présente invention concerne un système propulsif pour un aéronef, ce système propulsif comprenant un moteur à turboréacteur à double flux monté à l'intérieur d'une nacelle délimitant une veine d'écoulement du flux secondaire, et des moyens d'accrochage du moteur à un élément de structure de l'aéronef, telle qu'une aile de cet aéronef

GB-A-2 200 878 décrit un moteur qui est fixé sous une aile d'avion par des moyens de liaison qui sont décalés par rapport au plan vertical passant par l'axe longitudinal du moteur, du côté du fuselage de l'avion.

GB-A-1 599 730 décrit un pylône de fixation d'un moteur à une aile d'avion, ce pylône étant écarté d'un angle supérieur à 30° d'un plan vertical s'étendant le long du moteur.

Le système propulsif est accroché à l'aile de l'aéronef par des moyens qui permettent de transmettre à cette aile les efforts générés par le moteur pendant ses différents régimes de fonctionnement.

Les moyens d'accrochage du système propulsif comprennent en général une pièce très robuste et très lourde appelée pylône qui est agencée entre le moteur du turboréacteur et l'aile de l'aéronef. Ce pylône s'étend sensiblement dans un plan vertical passant par l'axe longitudinal du moteur, et comprend des moyens de suspension du moteur par lesquels passent tous les efforts transmis entre le moteur et l'aéronef.

Pour réduire les nuisances sonores et la consommation en carburant des moteurs à turboréacteur, les constructeurs ont tendance à augmenter le taux de dilution de ces moteurs, c'est-à-dire à augmenter le rapport entre le débit du flux secondaire et le débit du flux primaire. Pour cela, une solution consiste à augmenter le diamètre de la soufflante et de la nacelle et à réduire les dimensions transversales du corps du turboréacteur.

Cependant, l'augmentation du diamètre de la soufflante et de la nacelle entraîne une augmentation de l'encombrement transversal de l'ensemble propulsif. Pour que l'aéronef conserve une garde au sol suffisante, le système propulsif doit être rapproché de l'aile de l'aéronef, ce qui entraîne une réduction de l'espace alloué au pylône, qui est situé entre le système propulsif et l'aile. L'encombrement du pylône est relativement important car il doit avoir une structure suffisamment rigide et résistante. Typiquement, ce pylône est réalisé en titane et a une masse relativement importante. Il est en général agencé en aval de la soufflante du turboréacteur et s'étend au moins partiellement dans la veine d'écoulement du flux secondaire, ce qui perturbe l'écoulement de ce flux. La partie du pylône qui traverse la veine du flux secondaire doit être carénée pour avoir un profil aérodynamique et limiter les turbulences et les traînées d'interférence en aval du pylône.

La présente invention a notamment pour but d'apporter une solution simple, efficace et peu coûteuse à ces problèmes.

Elle propose à cet effet un système propulsif d'aéronef, comprenant un moteur à turboréacteur à double flux entouré par une nacelle délimitant une veine d'écoulement du flux secondaire, et des moyens d'accrochage du moteur sous un élément de structure d'un aéronef, en particulier sous une aile de cet aéronef, les moyens d'accrochage comprenant un pylône situé radialement à l'extérieur de la veine d'écoulement du flux secondaire et s'étendant dans un plan sensiblement parallèle à l'axe longitudinal du moteur, et des moyens de suspension du moteur au pylône, le plan du pylône étant décalé angulairement par rapport à un plan vertical passant par l'axe longitudinal du moteur, caractérisé en ce que les moyens de suspension du moteur au pylône comprennent deux poutres transversales sensiblement horizontales et parallèles qui relient le pylône à des moyens d'articulation sur des parties de sommet de carters du moteur.

Selon l'invention, les moyens d'accrochage du moteur comprennent un seul et unique pylône qui est décalé sur le côté du moteur de façon à libérer l'espace situé entre le système propulsif et l'aile de l'aéronef. Le pylône est par exemple décalé d'un angle compris entre 30 et 60°, et par exemple de 45° environ, autour de l'axe longitudinal du moteur, cet angle étant mesuré dans un plan perpendiculaire à l'axe longitudinal du moteur.

L'espace latéral dans lequel est situé le pylône a un volume plus important que celui situé entre le système propulsif et l'élément de structure de l'aéronef, ce qui facilite le montage et le démontage du pylône dans cet espace latéral. Le fait de décaler le pylône sur le côté du moteur permet également de limiter les turbulences dans l'écoulement d'air entre le système propulsif et l'aile. Le système propulsif peut être rapproché de l'aile de l'aéronef pour avoir une garde au sol optimale. Le pylône est situé à l'extérieur du flux secondaire et ne perturbe donc pas l'écoulement de ce flux, ce qui améliore les performances du turboréacteur. Le pylône est en outre éloigné des structures chaudes du turboréacteur et est donc exposé à des températures moins élevées en fonctionnement par rapport à la technique antérieure. II est alors envisageable de réaliser ce pylône dans un matériau léger mais robuste tel qu'un matériau composite. Un autre argument en faveur de cette configuration est lié au fait que dans le cas d'un aéronef volant à des vitesses se rapprochant de celle du son, la flèche de l'aile a pour effet que le pylône devient plus court du fait de son décalage vers l'intérieur, ce qui permet de réduire sa masse. Enfin, la réduction des traînées d'interférence en aval du pylône permet de limiter les nuisances sonores engendrées par le système propulsif.

Selon une caractéristique de l'invention, les moyens de suspension du moteur comprennent deux poutres transversales sensiblement horizontales et parallèles qui relient le pylône à des moyens d'articulation sur des parties de sommet de carters du moteur.

Les poutres de suspension du moteur s'étendent depuis le pylône situé sur le côté du moteur sensiblement jusqu'au niveau du plan vertical longitudinal. Les extrémités des poutres sont reliées par des moyens de liaison et d'articulation à des parties de sommet de carters du moteur. Ces moyens de liaison et d'articulation s'étendent de préférence, avec le centre de gravité de l'ensemble propulsif, au voisinage du plan vertical longitudinal, ce qui limite le risque de basculement du moteur dans le cas d'une dépose/pose de ce moteur lors d'un opération de maintenance ou de visite.

Le pylône peut porter une poutre transversale amont qui est reliée par des moyens d'articulation à une partie de sommet du carter intermédiaire du moteur, et une poutre transversale aval qui est reliée par des moyens d'articulation à une partie de sommet du carter d'échappement du moteur.

Les moyens d'articulation de la poutre transversale amont sur la partie de sommet du carter intermédiaire comprennent par exemple trois biellettes, une première reliée à l'extrémité libre de la poutre, une deuxième reliée à une partie intermédiaire de la poutre et une troisième reliée à la poutre entre sa partie intermédiaire et le pylône. Les biellettes sont avantageusement articulées sur la poutre amont et sur le carter intermédiaire par l'intermédiaire de liaisons rotulantes.

Les moyens de liaison et d'articulation de la poutre amont sur le carter intermédiaire sont avantageusement conçus pour reprendre les efforts s'exerçant selon des directions latérale et verticale par rapport à l'axe du moteur, ainsi que le couple s'exerçant selon l'axe du moteur.

La poutre transversale aval est par exemple reliée à son extrémité libre à deux biellettes en V qui sont articulées sur le carter d'échappement. Ces biellettes traversent la veine d'écoulement du flux secondaire et sont au moins partiellement carénées, pour limiter les turbulences et les pertes de charge dans le flux. Ces biellettes peuvent être articulées sur la poutre aval et sur le carter d'échappement par des liaisons rotulantes.

Les moyens de liaison et d'articulation de la poutre aval sur le carter d'échappement sont avantageusement conçus pour reprendre les efforts s'exerçant selon des directions latérale et verticale par rapport à l'axe du moteur.

Le pylône peut en outre comprendre un bras rigide oblique de support de moyens de reprise de poussée du moteur, ce bras s'étendant depuis le pylône vers le moteur et étant relié à son extrémité libre à un palonnier dont les extrémités sont reliées au carter intermédiaire par des biellettes.

Les points de liaison des deux biellettes sur le carter intermédiaire sont par exemple écartés l'un de l'autre d'un angle compris entre 90 et 180° environ, autour de l'axe longitudinal du moteur, cet angle étant mesuré dans un plan perpendiculaire à l'axe longitudinal du moteur. Ces points de liaison sont préférentiellement symétriques l'un de l'autre par rapport à un plan oblique passant par l'axe longitudinal du moteur et par le pylône. Le bras de support peut s'étendre sensiblement radialement dans ce plan.

Le bras de support fait avantageusement partie d'un conduit profilé de passage de servitudes telles que des conduits de fluide et des câbles électriques. Il s'étend à travers la veine d'écoulement du flux secondaire et peut présenter au moins partiellement un profil aérodynamique.

L'invention sera mieux comprise et d'autres caractéristiques, détails et avantages de l'invention apparaîtront à la lecture de la description suivante faite à titre d'exemple non limitatif et en référence aux dessins annexés dans lesquels :
- la figure 1 est une vue schématique de côté d'un système propulsif d'aéronef selon la technique antérieure ;
- la figure 2 est une vue schématique de l'arrière d'un système propulsif d'aéronef selon l'invention ;
- la figure 3 est une vue schématique en perspective du système propulsif de la figure 2, avec arrachement partiel de la nacelle, vu de l'aval et de côté ;
- la figure 4 est une autre vue schématique en perspective du système propulsif de la figure 2, avec arrachement complet de la nacelle, vu de l'aval et de côté ;
- la figure 5 est une vue agrandie d'une partie de la figure 4 ;
- la figure 6 est une vue schématique en perspective des moyens de suspension amont du moteur du système propulsif de la figure 2, vu de l'aval et de côté ;
- la figure 7 est une vue schématique en perspective des moyens de suspension aval du moteur du système propulsif de la figure 2, vu de l'aval et de côté ;
- la figure 8 est une vue schématique en perspective des moyens de reprise de poussée du moteur du système propulsif de la figure 2, vu de l'aval et de côté.

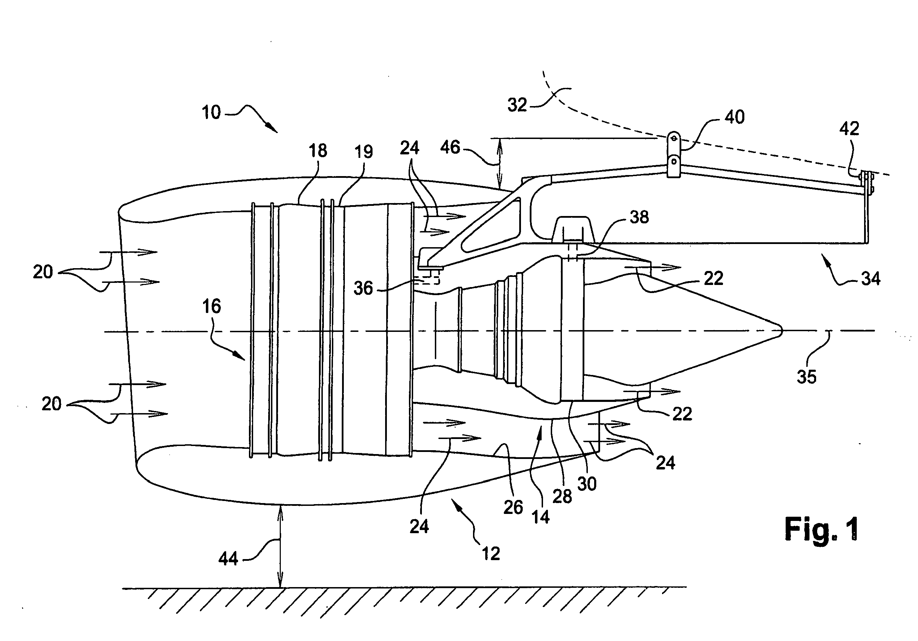

Le système propulsif 10 d'aéronef représenté schématiquement en figure 1 comprend une nacelle 12 de forme générale cylindrique à l'intérieur de laquelle est monté un turboréacteur 14 à double flux comprenant à l'avant une soufflante 16 dont la roue (non visible) est entraînée en rotation à l'intérieur d'un carter de soufflante 18. Le carter de soufflante 18 est relié à son extrémité aval à une paroi de révolution externe d'un carter intermédiaire 19. Les carters 18 et 19 portent la nacelle 12.

Le flux d'air 20 aspiré par la soufflante 16 est partagé en aval de la soufflante en un flux primaire 22 passant dans le turboréacteur 14 qui comprend d'amont en aval un compresseur, une chambre de combustion et une turbine, et en un flux secondaire 24 qui s'écoule entre le corps du turboréacteur 14 et la nacelle 12 et qui fournit la majorité de la poussée à laquelle s'ajoute celle fournie par les gaz de combustion éjectés de la turbine.

La veine du flux secondaire 24 est délimitée extérieurement par la paroi interne 26 de la nacelle 12 et intérieurement par une enveloppe cylindrique 28 qui entoure le corps du turboréacteur et qui s'étend depuis le moyeu (non visible) du carter intermédiaire 19 jusqu'à un carter d'échappement 30 situé en sortie de la turbine.

Dans la technique actuelle, le système propulsif 10 est accroché en général sous une aile 32 au moyen d'un pylône 34 qui s'étend sensiblement dans un plan vertical passant par l'axe longitudinal 35 du turboréacteur, dans l'espace 46 situé entre le corps du turboréacteur 14 et l'aile 32 de l'aéronef. Ce plan vertical longitudinal correspond au plan de coupe du dessin de la figure 1.

Le pylône 34 est réalisé dans un matériau rigide tel que du titane. Il comprend au niveau de sa partie d'extrémité amont des moyens 36, 38 de suspension du turboréacteur 14 par lesquels passent tous les efforts transmis entre le moteur et l'aéronef, la partie d'extrémité aval du pylône étant reliée à l'aile 32 de l'aéronef par des moyens de fixation 40, 42.

Comme cela a été décrit précédemment, l'augmentation du taux de dilution du turboréacteur, c'est-à-dire du rapport entre le débit du flux secondaire 24 et le débit du flux primaire 22, entraîne un élargissement des diamètres du carter de soufflante 18 et de la nacelle 12. Pour que l'aéronef conserve une garde au sol 44 suffisante, le moteur du turboréacteur est rapproché de l'aile 32 ce qui entraîne une réduction de l'espace 46 situé entre le moteur et l'aile, et du volume de cet espace alloué au pylône 34 d'accrochage du moteur.

Dans l'exemple représenté, la partie d'extrémité amont du pylône 34 s'étend dans la veine du flux secondaire 24 et est fixée sur le turboréacteur 14 par des moyens de suspension amont 36 s'étendant entre le pylône 34 et le moyeu du carter intermédiaire 19, et par des moyens de suspension aval 38 s'étendant entre le pylône et le carter d'échappement 30.

La partie d'extrémité amont du pylône 34 qui traverse la veine du flux secondaire 24 doit être carénée pour ne pas trop gêner l'écoulement du flux secondaire. Cependant, le pylône 34 engendre des turbulences et des pertes de charge importantes dans ce flux, ce qui réduit les performances du turboréacteur. De plus, l'air qui pénètre dans l'espace étroit 46 situé entre le turboréacteur 14 et l'aile 32 de l'aéronef doit contourner le pylône 34 ce qui crée une traînée importante sous l'aile 32 de l'aéronef.

L'invention permet de remédier au moins en partie à ces problèmes de la technique antérieure grâce à un pylône qui est décalé angulairement par rapport au plan vertical longitudinal, autour de l'axe 35 du turboréacteur, et qui est situé à l'extérieur de la veine d'écoulement du flux secondaire pour ne pas perturber cet écoulement, afin d'augmenter les performances du turboréacteur et de réduire ses émissions sonores en fonctionnement.

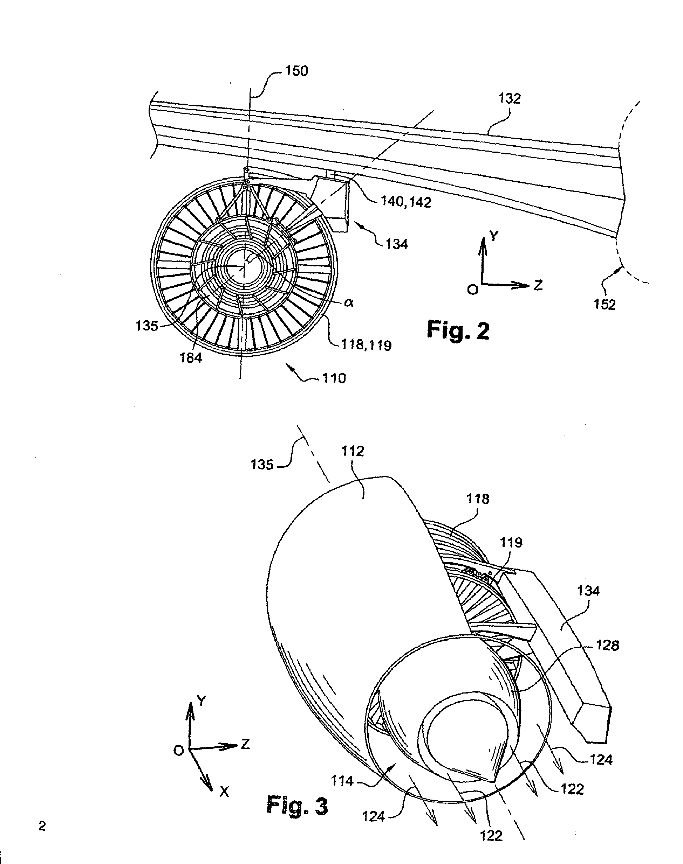

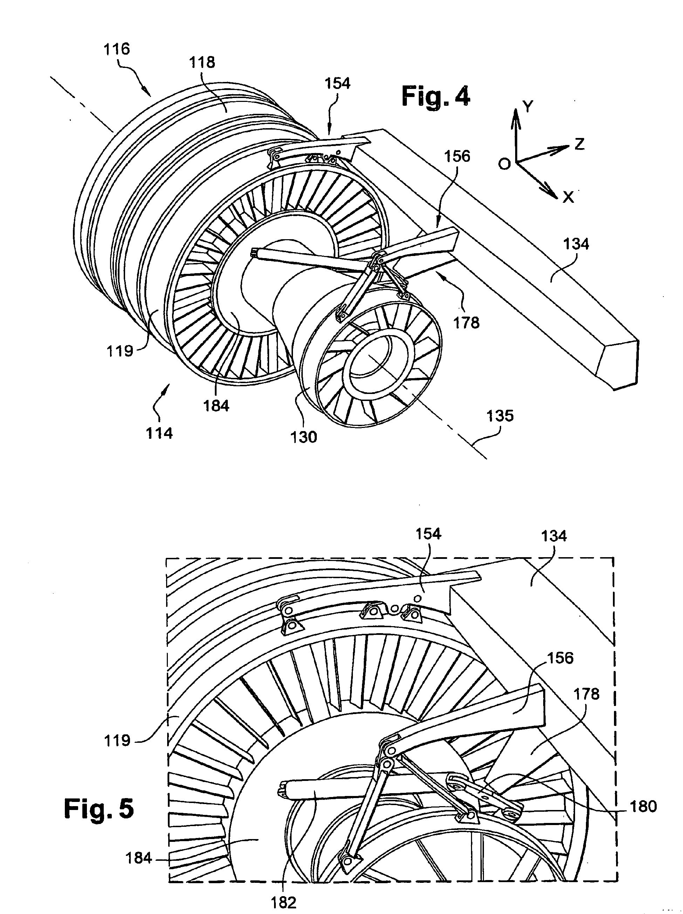

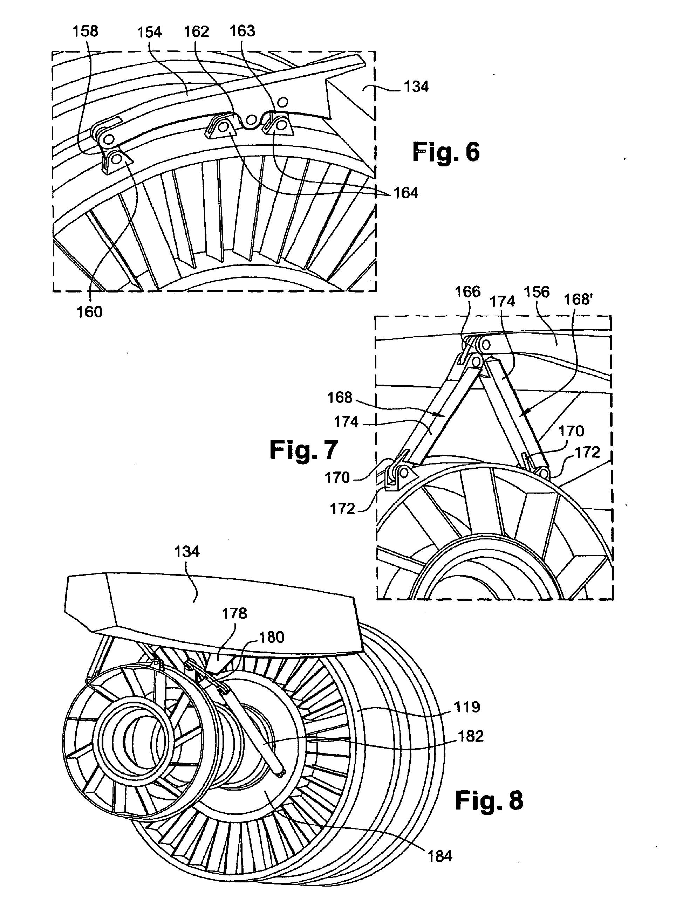

Dans l'exemple représenté aux figures 2 à 8, les éléments déjà décrits en référence à la figure 1 sont désignés par les mêmes chiffres augmentés d'une centaine.

Le pylône 134 est décalé d'un angle α compris entre 30 et 60°, et par exemple de 45° environ, autour de l'axe 135 par rapport au plan vertical longitudinal 150 et au sommet de la nacelle, cet angle étant mesuré dans un plan perpendiculaire à l'axe 135. Le pylône est fixé par des moyens 140, 142 appropriés sous l'aile 132 de l'aéronef et est disposé du côté du fuselage 152 de cet aéronef.

Le pylône 134 est disposé à l'extérieur de la paroi interne 126 de la nacelle 112, voire à l'extérieur de la nacelle 112, et n'est pas exposé à l'air du flux secondaire 124. Il peut donc être réalisé dans un matériau moins résistant thermiquement mais plus léger que le matériau des pylônes de la technique antérieure. Le pylône 134 est par exemple réalisé en matériau composite.

Le pylône comprend des poutres transversales amont 154 et aval 156 auxquelles le turboréacteur 114 est attaché par des moyens de suspension amont et aval, respectivement.

Les poutres amont 154 et aval 156 sont sensiblement parallèles et s'étendent dans un plan sensiblement horizontal depuis une partie latérale du pylône 134 située du côté opposé au fuselage 152 de l'aéronef, jusqu'à leurs extrémités libres situées au niveau du plan vertical longitudinal 150.

L'extrémité libre de la poutre amont 154 est articulée sur une extrémité d'une première biellette 158 dont l'autre extrémité est articulée sur l'axe d'une chape 160 portée par le sommet de la paroi de révolution externe du carter intermédiaire 119 du moteur. La poutre 154 est également articulée au niveau de sa partie médiane sur l'extrémité d'une seconde biellette 162 dont l'autre extrémité est articulée sur l'axe d'une chape 164 portée par la paroi externe du carter intermédiaire 119. Une partie intermédiaire de la poutre 154, située entre sa partie médiane et le pylône 134, est reliée par une troisième biellette 163 à une chape 164 portée par la paroi externe du carter intermédiaire 119.

Dans l'exemple représenté, les biellettes 158, 162, 163 ont une faible longueur et s'étendent dans un même plan transversal en étant orientées dans des directions différentes les unes des autres. Les biellettes 158, 162, 163 sont préférentiellement articulées sur la poutre 154 et les chapes 160, 164 par des liaisons rotulantes.

Le pylône 134 est relié par la poutre amont 154 à la paroi externe du carter intermédiaire 119 du moteur alors que le pylône 34 de la technique antérieure était relié au moyeu de ce carter intermédiaire.

On définit un repère orthonormé OXYZ, dans lequel l'axe longitudinal OX est parallèle à l'axe longitudinal 135 du moteur et est orienté vers l'aval, l'axe vertical OY est orienté verticalement vers le haut, et l'axe latéral OZ est orienté horizontalement vers un des côtés du moteur (par exemple vers le fuselage de l'aéronef), les axes OX, OY et OZ étant perpendiculaires entre eux.

La poutre 154, les biellettes 158, 162, 163 et leurs moyens d'articulation sont conçus pour assurer la reprise des efforts dans les directions latérale OZ et verticale OY, et le couple selon l'axe du moteur.

L'extrémité libre de la poutre aval 156 est articulée sur une pièce de liaison 166 qui est reliée aux extrémités de deux biellettes 168, 168' disposées en V. La pièce de liaison 166 a une forme générale triangulaire, la poutre aval 156 étant reliée de préférence par une liaison rotulante à la pièce de liaison, au niveau d'un premier de ses sommets. Une des deux biellettes 168 est reliée à une de ses extrémités, par l'intermédiaire d'une liaison à pivot ou analogue, à un second sommet de la pièce de liaison 166, et l'autre biellette 168' est reliée rigidement à une de ses extrémités au troisième sommet de la pièce de liaison 166.

Les autres extrémités des biellettes 168, 168' comprennent chacune une oreille 170 articulée sur l'axe d'une chape 172 portée par le carter d'échappement 130 du moteur. Les liaisons entre la poutre 156 et la pièce de liaison 166, et entre les biellettes 168, 168' et le carter d'échappement 130 sont rotulantes.

Les biellettes 168, 168' s'étendent dans un même plan transversal et sont inclinées l'une par rapport à l'autre de façon à former un V inversé.

Ces biellettes 168, 168' traversent la veine d'écoulement du flux secondaire 124 et ont un profil aérodynamique destiné à limiter les turbulences et les pertes de charge dans ce flux. Dans l'exemple représenté, la partie aval 174 de ces biellettes 168, 168' est en forme de dièdre dont l'arête est orientée vers l'aval.

La poutre 156, la pièce de liaison 166, les biellettes 168, 168' et leurs moyens d'articulation ou de liaison, sont conçus pour assurer la reprise des efforts dans les directions latérale OZ et verticale OY.

Comme cela a été vu dans ce qui précède, les extrémités libres des poutres amont 154 et aval 156 sont situées dans le plan vertical longitudinal 150 (figure 2). La biellette 158 de raccordement de l'extrémité libre de la poutre amont 154 à la chape 160 du carter intermédiaire 119 s'étend dans ce plan vertical 150. Les biellettes 168, 168' de raccordement du carter d'échappement 130 à la poutre aval 156 sont symétriques l'une de l'autre par rapport au plan vertical 150, et leurs points de fixation (chapes 172) sur le carter d'échappement sont également symétriques par rapport à ce plan. Le centre de gravité du moteur est situé dans le plan vertical longitudinal 150. Ainsi, lors d'une dépose/pose du turboréacteur 114, le basculement du moteur d'un côté ou de l'autre est très limité et il y a donc peu de risque de blessure des opérateurs réalisant l'opération de maintenance, ou d'endommagement de composants du système propulsif.

Le pylône 134 comprend également un bras rigide 178 de support de moyens de reprise de poussée du moteur. Le bras de support 178 s'étend transversalement et sensiblement radialement par rapport à l'axe du moteur depuis une partie médiane du pylône 134 vers le corps du turboréacteur 114, légèrement en amont du carter d'échappement 130.

Le bras 178 est articulé à son extrémité libre sur la partie médiane d'un palonnier 180 dont les extrémités sont chacune articulée sur une extrémité d'une bielle 182. Les bielles 182 s'étendent vers l'amont et leur autre extrémité est articulée par des moyens appropriés sur le moyeu du carter intermédiaire 119.

Les bielles 182 et les points de liaison de ces bielles sur le moyeu du carter intermédiaire 119 sont symétriques par rapport à un plan passant par l'axe longitudinal 135 du moteur et par le pylône 134. Ces points de liaison sont écartés l'un de l'autre d'un angle compris entre 90 et 180° environ, autour de l'axe longitudinal 135 du moteur, cet angle étant mesuré dans un plan perpendiculaire à l'axe 135.

Le bras de support 178 fait partie d'un conduit (non visible) de passage de servitudes telles que des câbles électriques et des conduits de fluides (air, huile, carburant, etc.), ce conduit traversant la veine du flux secondaire et étant caréné avec un profil aérodynamique pour limiter les turbulences dans ce flux. Le palonnier 180 et les bielles 182 sont disposés radialement à l'intérieur de l'enveloppe cylindrique entourant le corps du moteur (référencée 28 en figure 1) et ne sont donc pas exposés au flux secondaire.

## Revendications

1. Système propulsif d'aéronef, comprenant un moteur (114) à turboréacteur à double flux entouré par une nacelle (112) délimitant une veine d'écoulement du flux secondaire (124), et des moyens d'accrochage du moteur sous un élément de structure d'un aéronef, en particulier sous une aile de cet aéronef, les moyens d'accrochage comprenant un pylône (134) situé radialement à l'extérieur de la veine d'écoulement du flux secondaire et s'étendant dans un plan sensiblement parallèle à l'axe longitudinal (135) du moteur, et des moyens de suspension du moteur au pylône, le plan du pylône étant décalé angulairement par rapport à un plan vertical (150) passant par l'axe longitudinal du moteur, **caractérisé en ce que** les moyens de suspension du moteur au pylône comprennent deux poutres transversales (154, 156) sensiblement horizontales et parallèles qui relient le pylône (134) à des moyens d'articulation sur des parties de sommet de carters (119, 130) du moteur.

2. Système propulsif selon la revendication 1, **caractérisé en ce que** le pylône (134) est décalé d'un angle compris entre 30 et 60° environ autour de l'axe longitudinal (135) du moteur par rapport au plan vertical longitudinal (150) et au sommet de la nacelle (112).

3. Système propulsif selon la revendication 1 ou 2, **caractérisé en ce que** le pylône (134) porte une poutre transversale amont (154) qui est reliée par des moyens d'articulation à une partie de sommet du carter intermédiaire (119) du moteur, et une poutre transversale aval (156) qui est reliée par des moyens d'articulation à une partie de sommet du carter d'échappement (130) du moteur.

4. Système propulsif selon la revendication 3, **caractérisé en ce que** les moyens d'articulation de la poutre transversale amont (154) sur la partie de sommet du carter intermédiaire (119) comprennent trois biellettes, une première (158) reliée à l'extrémité libre de la poutre, une deuxième (162) reliée à une partie intermédiaire de la poutre, et une troisième (163) reliée à la poutre entre sa partie intermédiaire et le pylône (134).

5. Système propulsif selon l'une des revendications 3 ou 4, **caractérisé en ce que** la poutre transversale aval (156) est reliée par son extrémité libre à deux biellettes (168, 168') en V articulées sur la partie de sommet du carter d'échappement (130).

6. Système propulsif selon la revendication 5, **caractérisé en ce que** les biellettes (168, 168') traversent la veine d'écoulement du flux secondaire (124) et sont au moins partiellement carénées.

7. Système propulsif selon l'une des revendications 4 à 6, **caractérisé en ce qu'**au moins certaines des biellettes (158, 162, 163, 168, 168') sont articulées sur les poutres (154, 156) et sur les carters (119, 130) par des liaisons rotulantes.

8. Système propulsif selon l'une des revendications précédentes, **caractérisé en ce que** le pylône (134) comprend un bras rigide oblique (178) de support de moyens de reprise de poussée du moteur, ce bras s'étendant depuis le pylône vers le moteur et étant relié à son extrémité libre à un palonnier (180) dont les extrémités sont reliées au carter intermédiaire (119) par deux biellettes (182).

9. Système propulsif selon la revendication 8, **caractérisé en ce que** le bras de support (178) s'étend sensiblement radialement par rapport à l'axe longitudinal du moteur.

10. Système propulsif selon la revendication 8 ou 9, **caractérisé en ce que** les points de liaison des deux biellettes (182) sur le carter intermédiaire sont écartés l'un de l'autre d'un angle compris entre 90 et 180° environ, autour de l'axe longitudinal (135) du moteur.

11. Système propulsif selon la revendication 10, **caractérisé en ce que** les points de liaison des deux biellettes (182) sont symétriques l'un de l'autre par rapport à un plan oblique passant par l'axe longitudinal du moteur et par le pylône (134).

12. Système propulsif selon l'une des revendications 8 à 11, **caractérisé en ce que** le bras de support (178) fait partie d'un conduit profilé de passage de servitudes telles que des conduits de fluide et des câbles électriques.

## Claims

1. An aircraft propulsion system comprising a bypass turbojet engine (114) surrounded by a nacelle (112) defining a passage in which the secondary stream (124) flows, and connection means for connecting the engine under a structural element of an aircraft, in particular under a wing of the aircraft, the connection means comprising a pylon (134) situated radially outside the flow passage for the secondary stream and lying in a plane substantially parallel to the longitudinal axis (135) of the engine, and means for suspending the engine from the pylon, the plane of the pylon being angularly offset from a vertical plane (150) containing the longitudinal axis of the engine, the system being **characterized in that** the means for suspending the engine from the pylon comprise two parallel and substantially horizontal transverse beams (154, 156) that connect the pylon (134) to hinge means on top portions of the casings (119, 130) of the engine.

2. A propulsion system according to claim 1, **characterized in that** the pylon (134) is offset about the longitudinal axis (135) of the engine by an angle lying in the range 30° to 60°, approximately, away from the longitudinal vertical plane (150) and from the top of the nacelle (112).

3. A propulsion system according to claim 1 or 2, **characterized in that** the pylon (134) carries an upstream transverse beam (154) that is connected by hinge means to a top portion of the intermediate casing (119) of the engine, and a downstream transverse beam (156) that is connected by hinge means to a top portion of the exhaust casing (130) of the engine.

4. A propulsion system according to claim 3, **characterized in that** the hinge means of the upstream transverse beam (154) connected to the top portion of the intermediate casing (119) comprise three links, a first link (158) connected to the free end of the beam, a second link (162) connected to an intermediate portion of the beam, and a third link (163) connected to the beam between its intermediate portion and the pylon (134).

5. A propulsion system according to claim 3 or 4, **characterized in that** the downstream transverse beam (156) is connected at its free end to two links (168, 168') in a V-shaped configuration that are hinged to the top portion of the exhaust casing (130).

6. A propulsion system according to claim 5, **characterized in that** the links (168, 168') pass through the passage for passing the secondary stream (124) and are faired, at least in part.

7. A propulsion system according to any one of claims 4 to 6, **characterized in that** at least some of the links (158, 162, 162, 168, 168') are hinged to the beams (154, 156) and to the casings (119, 130) via ball-and-socket connections.

8. A propulsion system according to any one of the preceding claims, **characterized in that** the pylon (134) comprises an oblique rigid arm (178) supporting engine thrust take-up means, the arm extending from the pylon towards the engine and being connected at its free end to a crossbar (180) having its ends connected to the intermediate casing (119) via two links (182).

9. A propulsion system according to claim 8, **characterized in that** the support arm (178) extends substantially radially relative to the longitudinal axis of the engine.

10. A propulsion system according to claim 8 or 9, **characterized in that** the connection points between the two links (182) and the intermediate casing are spaced apart from each other about the longitudinal axis (135) of the engine by an angle lying in the range 90° to 180°, approximately

11. A propulsion system according to claim 10, **characterized in that** the connection points of the two links (182) are symmetrical to each other relative to an oblique plane containing the longitudinal axis of the engine and the pylon (134).

12. A propulsion system according to any one of claims 8 to 11, **characterized in that** the support arm (178) forms a portion of a streamlined duct for passing services such as fluid-conveying pipes and electric cables.

## Patentansprüche

1. Antriebssystem für ein Luftfahrzeug, das einen Motor (114) mit Zweikreisstrahltriebwerk aufweist, umgeben von einer Gondel (112), die eine Abflussströmung für den Sekundärfluss (124) abgrenzt, und Mittel zum Aufhängen des Motors unter einem Strukturelement eines Luftfahrzeugs, insbesondere unter einem Flügel dieses Luftfahrzeug, wobei die Aufhängungsmittel einen Pylon (134) aufweisen, der radial außerhalb der Abflussströmung liegt und sich in einer Ebene im Wesentlichen parallel zu der Längsachse (135) des Motors erstreckt, sowie Mittel zur Aufhängung des Motors am Pylon, wobei die Ebene des Pylons winkelmäßig bezüglich einer vertikalen Ebene (150) versetzt ist, die durch die Längsachse des Motors verläuft, **dadurch gekennzeichnet, dass** die Mittel zum Aufhängen des Motors an dem Pylon zwei im Wesentlichen horizontale und parallele Querträger (154, 156) aufweisen, die den Pylon (134) mit Ablenkungsmitteln an Scheitelteilen von Gehäusen (119, 130) des Motors verbinden.

2. Antriebssystem nach Anspruch 1, **dadurch gekennzeichnet, dass** der Pylon (134) um einen Winkel von etwa 30 und 60° um die Längsachse (135) des Motors bezüglich der vertikalen Längsachse (150) und dem Scheitel der Gondel (112) versetzt ist.

3. Antriebssystem nach Anspruch 1 oder 2, **dadurch gekennzeichnet, dass** der Pylon (134) einen stromaufwärts gelegenen Querträger (154) trägt, der durch Anlenkungsmittel mit einem Scheitelteil des Zwischengehäuses (119) verbunden ist, und einen stromabwärts gelegenen Querträger (156), der durch Anlenkungsmittel mit einem Scheitelteil des Auslassgehäuses (130) verbunden ist.

4. Antriebssystem nach Anspruch 3, **dadurch gekennzeichnet, dass** die Mittel zum Anlenken des stromaufwärts gelegenen Querträgers (154) an den Scheitelteil des Zwischengehäuses (119) drei Schwingarme aufweisen, einen ersten (158) mit dem freien Ende des Trägers verbundenen, einen zweiten (162) mit einem Zwischenteil des Trägers verbundenen und einen dritten (163) mit dem Träger zwischen seinem Zwischenteil und dem Pylon (134) verbundenen.

5. Antriebssystem nach einem der Ansprüche 3 oder 4, **dadurch gekennzeichnet, dass** der stromabwärts gelegene Querträger (156) durch sein freies Ende mit zwei V-förmigen Schwingarmen (168, 168') verbunden ist, die an den Scheitelteil des Auslassgehäuses (130) angelenkt sind.

6. Antriebssystem nach Anspruch 5, **dadurch gekennzeichnet, dass** die Schwingarme (168, 168') die Abflussströmung des Sekundärflusses (124) durchqueren und wenigstens teilweise stromlinienförmig sind.

7. Antriebssystem nach einem der Ansprüche 4 bis 6, **dadurch gekennzeichnet, dass** wenigstens bestimmte der Schwingarme (158, 162, 163, 168, 168') an die Träger (154, 156) und die Gehäuse (119, 130) durch Kugelgelenkverbindungen angelenkt sind.

8. Antriebssystem nach einem der vorhergehenden Ansprüche, **dadurch gekennzeichnet, dass** der Pylon (134) einen schiefen starren Arm (178) zum Stützen von Mitteln zur Schubwiederaufnahme des Motors aufweist, wobei sich dieser Arm von dem Pylon zu dem Motor erstreckt und an seinem freien Ende mit einem Schwinghebel (180) verbunden ist, dessen Enden mit dem Zwischengehäuse (119) durch zwei Schwingarme (182) verbunden sind.

9. Antriebssystem nach Anspruch 8, **dadurch gekennzeichnet, dass** sich der Stützarm (178) im Wesentlichen radial bezüglich der Längsachse des Motors erstreckt.

10. Antriebssystem nach Anspruch 8 oder 9, **dadurch gekennzeichnet, dass** die Verbindungspunkte der zwei Schwingarme (182) an dem Zwischengehäuse voneinander um einen Winkel zwischen etwa 90 und 180° um die Längsachse (135) des Motors beabstandet sind.

11. Antriebssystem nach Anspruch 10, **dadurch gekennzeichnet, dass** die Verbindungspunkte der zwei Schwingarme (182) bezüglich einer schiefen Ebene zueinander symmetrisch sind, die durch die Längsachse des Motors und durch den Pylon (134) verläuft.

12. Antriebssystem nach einem der Ansprüche 8 bis 11, **dadurch gekennzeichnet, dass** der Stützarm (178) Teil einer Profilleitung zum Durchgang von Hilfseinrichtungen wie Fluidleitungen und elektrischen Kabeln ist.
